Europäisches Patentamt

European Patent Office

Office européen des brevets

(19)

(11) Veröffentlichungsnummer: **0 182 318**
**B1**

(12) **EUROPÄISCHE PATENTSCHRIFT**

(45) Veröffentlichungstag der Patentschrift: 02.05.90

(51) Int. Cl.⁵: **B 60 J 5/04**

(21) Anmeldenummer: 85114558.1

(22) Anmeldetag: 16.11.85

(54) **Vorrichtung zur gleichzeitigen Abdichtung der Türscheibe und des Dachbereiches einer Kraftfahrzeug-Tür.**

(30) Priorität: 19.11.84 DE 3442241

(43) Veröffentlichungstag der Anmeldung:
28.05.86 Patentblatt 86/22

(45) Bekanntmachung des Hinweises auf die
Patenterteilung:
02.05.90 Patentblatt 90/18

(84) Benannte Vertragsstaaten:
DE FR GB IT SE

(56) Entgegenhaltungen:
EP-A-0 061 027
EP-A-0 083 696
GB-A-2 075 101

(73) Patentinhaber: METZELER Gesellschaft mit
beschränkter Haftung
Gneisenaustrasse 15
D-8000 München 50 (DE)

(72) Erfinder: Brachmann, Walter
Conrad-Forsterstrasse 72
D-8993 Nonnenhorn (DE)

(74) Vertreter: Michelis, Theodor, Dipl.-Ing.
Gneisenaustrasse 15
D-8000 München 50 (DE)

Courier Press, Leamington Spa, England.

## Beschriebung

Die Erfindung betrifft eine Vorrichtung zur gleichzeitigen Abdichtung der Türscheibe und des Dachbereichs für eine Kraftfahrzeugtür, die ein einstükiges Profil aus einem elastomeren Material mit einem am Türrahmen anbringbaren Befetigungsbereich, mindestens einem Dichtungselement für den Bereich zwischen oberer Türkante und Dach aufweist, wobei der Befestigungsbereich des Profils durch zwei U-förmige Aussparungen gebildet ist und das Profil eine Verstärkungseinlage aufweist, die die beiden U-förmigen Aussparungen umgibt.

Eine derartige Vorrichtung ist aus der EP—A—0 083 696 bekannt. Dabei liegen innerhalb des Profils die beiden U-förmigen Aussparungen in einer Ebene einander gegenüber, so daß das Profil beim Aufschieben weit auseinandergebogen werden muß, um die beiden seitlich abragenden Blechkanten des Türrahmes zu umfassen. Diese Ausführungsform bedingt daher eine relativ umständliche Montage, die insbesondere nicht "robotergerecht" ist, d.h. dieses Profil kann nicht selbsttätig von Robotern montiert werden, wie sie im zunehmenden Maße bei der Automobilfertigung eingesetzt werden sollen.

Der Erfindung liegt daher die Aufgabe zugrunde, eine Abdichtungsvorrichtung der angegebenen Art zu schaffen, die sich problemlos auch von einem Roboter an einer Kraftfahrzeug-Tür montieren läßt.

Zur Lösung dieser Aufgabe ist erfindungsgemäß vorgesehen, daß die mit Befestigungslippen versehenen Aussparungen auf parallel zueinander abragenden Blechkanten des Türrahmens aufklemmbar sind und die Verstärkungseinlage bis zur außenliegenden Vorderseite des Profils reicht.

Zweckmäßige Ausführungsformen sind in den Unteransprüchen zusammengestellt.

Die mit der Erfindung erzielten Vorteile beruhen insbesondere darauf, daß der Befestigungsbereich des Profiles aus elastomeren Material, insbesondere aus Gummi, auf entsprechend ausgestaltete Blechkanten des Türrahmens aufgeklemmt werden kann, wie es sich problemlos von einem Roboter ausführen läßt. Um die erforderlichen Klemmkräfte zu erzeugen, ist im Befestigungsbereich eine zweckmäßiger Weise einstückige Verstärkungseinlage aus Stahl oder Aluminium vorgesehen, die einerseits die zugehörigen, U-förmigen, mit Befestigungslippen ausgestalteten Aussparungen des Profils umgibt und anderseits bis in die Stirnfläche des Profils reicht, also auch noch den Dichtungsbereich für das Dach versteift, so daß auch bei Längerem Gebrauch und/oder bei höheren Geschwindigkeiten des Fahrzeugs in diesem Bereich noch eine ausreichende Abdichtung gewährleistet ist.

Dieses Profil kann in einem Arbeitsgang mit der einstückigen Verstärkungseinlage, die zweckmäßigerweise "umspritzt" wird, und mit einer Zierleiste versehen werden, die bspw, aus Edelstahl, eloxiertem Aluminium oder einem entsprechend ausgestalteten Kunstoff besteht.

Die Erfindung wird im folgenden anhand von Ausführungsbeispielen unter Bezugnahme auf die beiliegenden, schematischen Zeichnungen näher erläutert. Es zeigen.

Fig. 1 einen Schnitt durch eine erste Ausführungsform einer erfindungsgemäßen Abdichtungsvorrichtung, und

Fig. 2 einen Schnitt durch eine abgewandelte ausführungsform, bei der die Verstärkungseinlage noch mit dem Türrahmen vernietet ist.

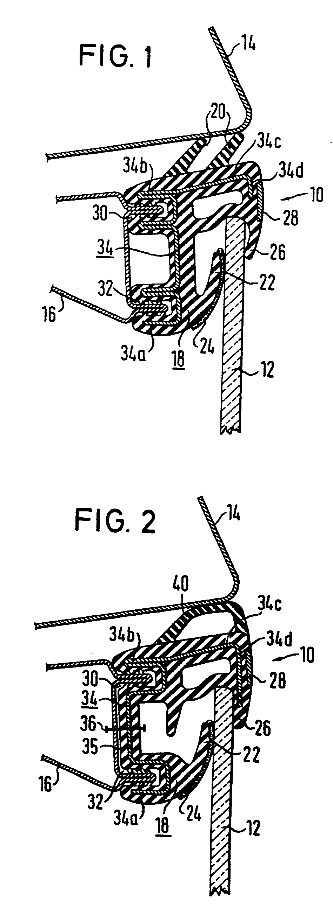

Die aus Fig. 1 ersichtliche, allgemein durch das Bezugszeichen 10 angedeutete Abdichtungsvorrichtung weist ein Gummiprofil 18 auf, das einerseits auf dem Türrahmen 16 befestigt ist und andererseits sowohl die Türscheibe 12 als auch den Dachbereich 14 der Kraftfahrzeug-Karosserie abdichtet.

Wie man aus Fig. 1 erkennt, sind die den Türrahmen bildenden Bleche 16 so zusammengeführt, daß sich zwei stabile Blechkanten ergeben. Diese Blechkanten werden in zwei U-förmige Aussparungen 30 und 32 des Gummiprofils 18 eingeschoben, die mit nach innen ragenden Befestigungslippen versehen sind.

Zur Versteifung des Gummiprofils 18 im Bereich der U-Förmigen Aussparungen dient eine aus Stahl oder Aluminium bestehende, einstückige Verstärkungseinlage 34, die einerseits die beiden U-förmigen Aussparungen umgibt und anderseits bis in die nach außen freiliegende Stirnfläche des Gummiprofils 18 reicht. Diese Verstärkungseinlage 34 weist also einen ersten, U-förmigen Bereich 34a, der die U-förmige Aussparung 32 umgibt, einen stegförmigen Übergangsbereich, einen zweiten, U-förmigen Bereich 34b, der die zweite U-förmige Aussparung 30 umgibt, einen gemäß der Darstellung in Fig. 1 nach rechts ragenden Bereich 34c und schließlich einen abgeknickten Endbereich 34d auf.

An seiner Oberseite ist das Gummiprofil 18 mit Dichtungslippen 20 aus einem weicheren Gummi, bspw. Gummi mit einer Shore A Härte von 50 bis 70 versehen, die an dem Dachbereich 14 anliegen.

Außerdem weist das Gummiprofil 18 zwei weitere Dichtungslippen auf, von denen die Dichtungslippe 22 an der Rückseite der Türscheibe 12 anliegt, während die Dichtungslippe 26 die Türscheibe 12 von oben und von vorne umfaßt. Die Dichtgungslippe 22 ist mit einer üblichen Beflockung 24 versehen.

In die nach außen gewandte Stirnfläche des Gummiprofils 18 ist eine Zierleiste 28 eingesetzt, die aus Edelstahl, eloxiertem Aluminium oder aus einem Kunststoff bestehen kann.

Dieses Gummiprofil 18 wird in einem einzigen Arbeitsgang hergestellt, d.h., es werden gleichzeitig die Verstärkungseinlage 34 mit der entsprechenden Gummimischung umspritzt, die Dichtungslippen 20 aus der anderen Gummimischung angespritzt und auch die Zierleiste 28 eingesetzt. Wie man in den Fig. 1 und 2 erkennt, verläuft die Stirnfläche der Zierleiste 28 bündig mit der Stirnfläche des Gummiprofils 18, so daß diese Herstellung keine Probleme bereitet.

Die Ausführungsform nach Fig. 2 unterscheidet sich dadurch von der Ausführungsform nach Fig. 1, daß der brückenartige Steg der Verstärkungseinlage 34 nicht vorgesehen ist, sondern die beiden U-förmigen Bereiche der Verstärkungseinlage 34 direkt miteinander verbunden sind. Der dadurch entstehende, stegförmige Bereich 35 verläuft parallel zu der entsprechenden Fläche des Türrahmens 16 und im geringen Abstand von diesem. Um die Befestigung des Gummiprofils 18 auf dem Türrahmen 16 noch zu verbessern, kann die Verstärkungseinlage 34 in diesem Bereich, nämlich an ihrem Steg 35, durch einen Niet 36 mit dem Türrahmen 16 verbunden werden. Auch dieser zusätzliche Arbeitsgang läßt sich problemlos mittels des Roboters durchführen, der auch das Gummiprofil 18 auf die beiden Blechkanten des Türrahmens 16 klemmt. Darüber hinaus ist die Dichtungslippe auf der Oberseite als Hohlkammerprofil 40 ausgebildet und die Dichtlippe 267 umfaßt mit der Verstärkungseinlage 34 d die Oberkante der Scheibe 12 über einen größeren Bereich, um eine bessere Anlage und Abdichtung zu schaffen.

**Patentansprüche**

1. Vorrichtung zur gleichzeitigen Abdichtung einer Türscheibe (12) und des Dachbereichs (14) für eine Kraftfahrzeugtür, die ein einstückiges Profil (10) aus einem elastomeren Material mit einem am Türrahmen (16) anbringbaren Befestigungsbereich, mindestens einem Dichtungselement (18) für die Türscheibe (12) und einem Dichtungselement (20; 40) für den Bereich zwischen oberer Türkante und Dach (14) aufweist, wobei der Befestigungsbereich (18) des Profils (10) durch zwei U-förmige Aussparungen (30, 32) gebildet ist und das Profil (10) eine Verstärkungseinlage (34) aufweist, die die beiden U-förmigen Aussparungen (30, 32) umgibt, dadurch gekennzeichnet, daß die mit Befestigungslippen versehenen Aussparungen (30, 32) auf parallel zueinander abragenden Blechkanten des Türrahmens (16) aufklemmbar sind und die Verstärkungseinlage (34) bis zur außenliegenden Vorderseite des Profils (18) reicht.

2. Vorrichtung nach Anspruch 1, dadurch gekennzeichnet, daß eine einstückige Verstärkungseinlage (34) aus Stahl oder Aluminium vorgesehen ist.

3. Vorrichtung nach einem der Ansprüche 1 oder 2, dadurch gekennzeichnet, daß die Verstärkungseinlage (34) einen abgebogenen Endbereich (34d) aufweist, der etwa parallel zur Stirnfläche des Profils (18) und damit zur Scheibe (12) verläuft.

4. Vorrichtung nach Anspruch 3, dadurch gekennzeichnet, daß in die Stirnfläche des Profils (18) im Bereich der Endkante (34d) der Verstärkungseinlage (34) eine Zierleiste (28) eingesetzt ist.

5. Vorrichtung nach einem der Ansprüche 1 bis 4, dadurch gekennzeichnet, daß die Verstärkungseinlage (34) durch ein Befestigungselement (36) mit dem Türrahmen (16) verbunden ist.

6. Vorrichtung nach Anspruch 5, dadurch gekennzeichnet, daß das Befestigungselement durch ein Niet (36) gebildet wird.

**Revendications**

1. Dispositif pour rendre simultanément étanches la glace de portière (12) et la région du toit (14) d'une portière de véhicule automobile, qui comporte un profilé (10) d'un seul tenant en une matière élastomère et ayant une région pouvant être appliquée sur le cadre de a portière (16), au moins un élément d'étanchéité (18) pour la glace de portière (12) et un élément d'étanchéité (20, 40) pour la partie comprise entre le bord supérieur de la portière et le toit (4), la région de fixation (18) du profilé (10) étant formée de deux parties évidées (30, 32) en forme de U et le profilé (10) comportant un insert de renforcement (34), qui entoure les deux parties évidées (30, 32) en forme de U, caractérisé en ce que les parties évidées (30, 32), munies de lèvres de fixation, peuvent être serées sur les bords de tôle du cadre de la portière (16), qui sont en saillie et parallèles entre eux, et l'insert de renforcement (34) va jusqu'au côté antérieur, situé à l'extérieur, du profilé (18).

2. Dispositif suivant la revendication 1, caractérisé en ce qu'il est prévu un insert de renforcement (34) d'un seul tenant en acier ou en aluminium.

3. Dispositif suivant l'une des revendications 1 ou 2, caractérisé en ce que l'insert de reforcement (34) comporte une région d'extrémité (34d) coudée, qui s'étend sensiblement parallèlment à la surface frontale du profilé (18) et donc à la glace (12).

4. Dispositif suivant la revendication 3, caractérisé en ce qu'un enjoliveur (28) est monté dans la surface frontale du profilé (18), dans la région du bord d'extrémité (34d) de l'insert de reforcement (34).

5. Dispositif suivant l'une des revendications 1 à 4, caractérisé en ce que l'insert de reforcement (34) est relié au cadre de la portière (16) par un élément de fixation (36).

6. Dispositif suivant la revendication 5, caractérisé en ce que l'élément de fixation est formé par un rivet (36).

**Claims**

1. A device for simultaneously sealing a door window (12) and the roof area (14) of a motor vehicle door, the said device comprising an integrally formed profile (10) made of an elastomeric material having a securing section which can be fitted to the door frame (16), at least one sealing element (18) for the door window (12) and one sealing element (20; 40) for the area between the upper door edge and the roof (14), the securing section (18) of the profile (10) being formed by two U-shaped recesses (30, 32) and the profile (10) comprising a reinforcing insert (34), which encloses the two U-shaped recesses (30,32) characterised in that the recesses (30, 32) provided with securing lips can be clamped onto parallelly projecting plate edges of the door frame (16) and the reinforcing insert (34) extends as far as the external front side of the profile (18).

2. A device according to claim 1, characterised in that an integrally formed reinforcing insert (34) made of steel or aluminium is provided.

3. A device according to one of claims 1 or 2, characterised in that the reinforcing insert (34) comprises a bent end portion (34d), which extends approximately parallel to the end face of the profile (18) and therefore to the window (12).

4. A device according to claim 3, characterised in that a trim (28) is inserted in the end face of the profile (18) in the region of the end edge (34d) of the reinforcing insert (34).

5. A device according to one of claims 1 to 4, characterised in that the reinforcing insert (34) is connected with the door frame (16) via a securing element (36).

6. A device according to claim 5, characterised in that the securing element is formed by a rivet (36).

FIG. 1

FIG. 2